# EUROPEAN PATENT SPECIFICATION

(11) **EP 1 295 372 B1**
(45) Date of publication and mention of the grant of the patent: **23.11.2011**
(21) Application number: 01936808.3
(22) Date of filing: 18.05.2001
(51) Int. Cl.: H02B 1/06

(54) **A COVER FOR CLOSING AN OPENING IN A PANEL OF AN ELECTRICAL DISTRIBUTION BOARD**
ABDECKUNG ZUM VERSCHLIESSEN EINER ÖFFNUNG IN EINER SCHALTTAFEL
COUVERCLE DESTINE A LA FERMETURE D'UNE OUVERTURE MENAGEE DANS UN PANNEAU DE TABLEAU DE DISTRIBUTION ELECTRIQUE

(30) Priority: 19.05.2000 IT RM000270
(43) Date of publication of application: 26.03.2003
(73) Proprietor: BTICINO S.P.A., 20054 Milano (IT)
(72) Inventor: PASSERA, Costantino, I-20094 Corsico (IT); BORRI, Luigi, I-21040 Venegono Inferiore (IT)
(74) Representative: Carangelo, Pierluigi
(86) International application number: PCT/IT2001/000250
(87) International publication number: WO 2001/089047

(56) References cited:
- DE-A- 3 538 177
- DE-U- 9 117 179

## Description

The present invention relates to electrical distribution boards and, more particularly, to a cover for closing an opening in a panel of an electrical distribution board as defined in the preamble of claim 1 and known from DE-A-35 38 177.

An electrical distribution board is generally constituted by a metal framework composed of upright members and cross-members, by bars for supporting devices, and by sheet-metal panels fixed to the framework, and is designed for containing internal distribution and connecting structures and electrical devices, at least some of which are accessible from the exterior.

To take account of a plurality of different configurations of the electrical devices which are to be visible and/or accessible from the exterior, such as, for example, switches, and to avoid manufacturing different panels for every configuration, the panels are provided with windows of standard dimensions, for example, such as to house the maximum number of switches provided for by the particular type of distribution board. When the number of electrical devices to be fitted is smaller than the maximum number, the spaces which would otherwise remain open are closed by suitable covers which are advantageously of standard dimensions and of which a quantity sufficient to close the window completely is fitted.

Covers of various types are known and are usually constituted by plastics plates with fixing elements which can be snap-engaged between two opposed edges of the opening to be closed. It has been found that this closure system is not always reliable because the grip of the fixing elements is often insufficient so that it is easy to remove the covers manually without tools. This leads to serious risks to personal safety because the spaces which remain open permit potentially dangerous situations such as the deliberate or unintentional insertion of fingers or metal objects. To render this closure system more effective and safer, it would be necessary for the windows and the covers to be manufactured with quite tight dimensional tolerances, but this would adversely affect manufacturing costs.

The main aim of the present invention is to provide a closure system which is safer than the known system and which does not require tight manufacturing tolerances.

This aim is achieved by the cover defined and characterized in general in Claim 1.

The invention will be understood better from the following detailed description of two embodiments thereof, given with reference to the appended drawings, in which:
Figures 1 and 2 are perspective views, from the outside and from the inside, respectively, of a panel of an electrical distribution board with a window on which a cover according to a first embodiment of the invention is fitted,
Figures 3 and 4 are perspective views of the cover of the first embodiment of the invention, from the outside and from the inside, respectively, on an enlarged scale, and with parts separated,
Figure 5 is a perspective view, from the inside, of a portion of a panel of an electrical distribution board with an opening closed by a cover according to a second embodiment of the invention, and
Figure 6 shows the panel with the cover according to the second embodiment of the invention, in section, during a fitting stage.

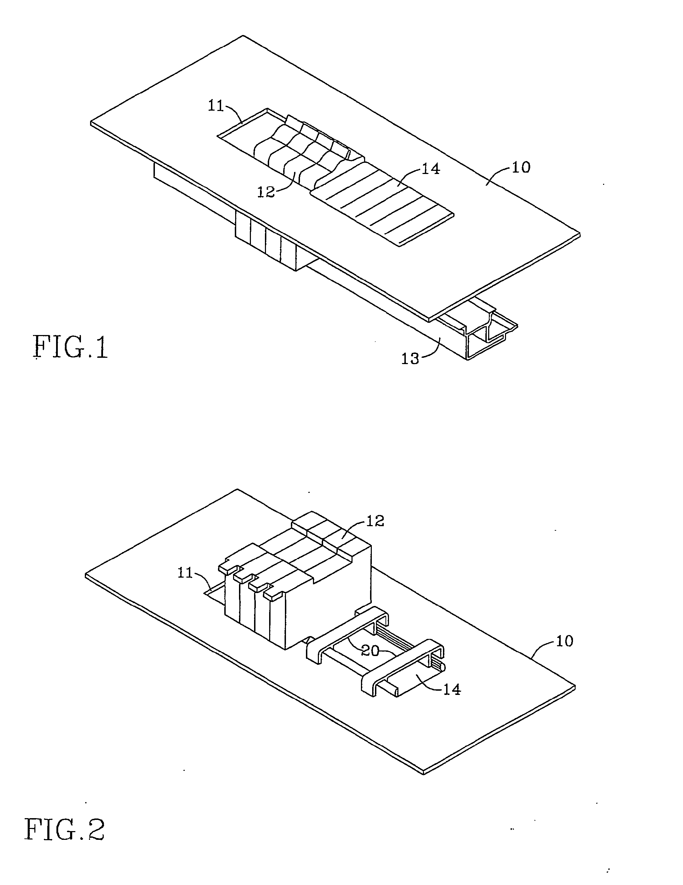

Figure 1 shows a panel 10 of an electrical distribution board, not shown, with a window 11; the portions containing the operating levers of four identical, juxtaposed switches 12 project from the window 11. The switches 12 are mounted on a rail of a support bar 13 fixed to the framework of the electrical distribution board in a manner not shown. The dimensions of the window 11 are such that it can hold 12 identical switches or other electrical devices of the same width or multiple of a standard modular width. If, as in this example, the window is only partially closed by the switches, it is necessary to complete its closure with one or more covers. In this example, two covers are required, of which only one, indicated 14, is shown in position. The cover is constituted by a plate 14, preferably formed from a rigid plastics strip which has transverse nicks spaced apart in accordance with the standard module dimension. The nicks define breakage lines which enable covers of different sizes to be prepared easily without the use of tools.

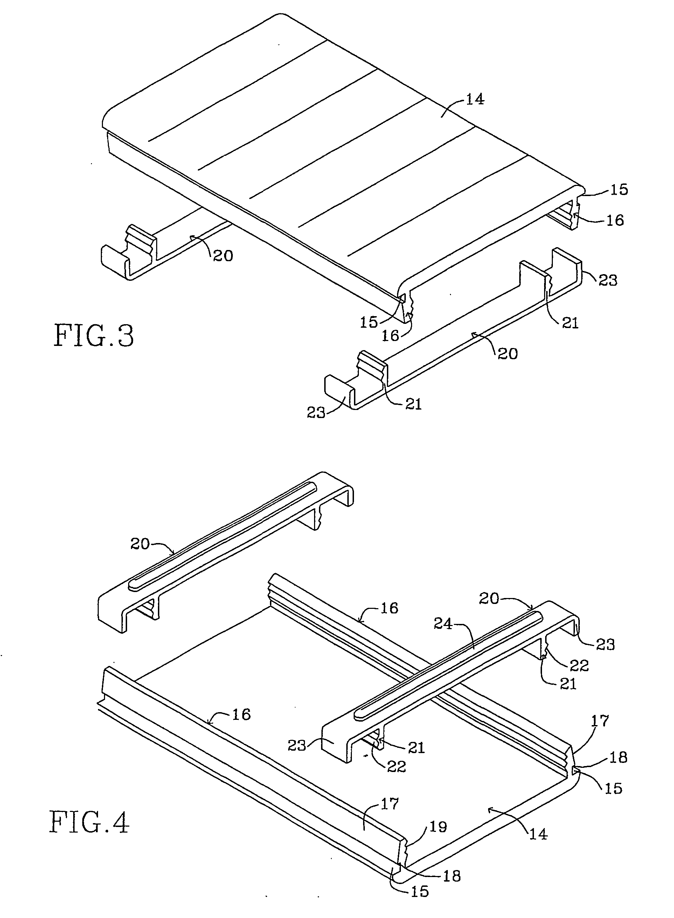

The plate 14 closes an opening having the width of six modules and, as can be seen in Figures 3 and 4 in particular, is placed with its opposed edges 15 over two opposed edge areas of the window 11. Two appendages 16 extend parallel to the edges of the plate to form means for snap-fixing the plate to the panel. More particularly, the appendages 16 are formed integrally with the plate 10 and each has an inclined plane 17 as a lead-in surface for coupling with the opening to be closed, and an engagement tooth 18. The appendages are relatively thin, at least at the point of connection to the plate, to permit resilient bending, and their distance apart is selected so as to permit snap-restraint of the plate in the opening.

To ensure a firm coupling, according to the invention, the means for fixing the plate to the panel also comprise two crosspieces 20 which are fitted, by means of further restraining elements, on the inner face of the panel, that is, the opposite face to that from which the operating members of the switches 12 project. More particularly, these further restraining elements are constituted by two resilient tabs 21 which project from the crosspiece 20, are integral therewith, and have respective saw-tooth-shaped faces 22, and by the appendages 16 of the plate, which are shaped in a complementary manner with corresponding saw-teeth 19. The tabs 21 of each crosspiece are spaced apart by a distance such as to permit snap-restraint between their teeth 22 and the teeth 19 of the appendages. Once in position, the crosspieces 20 prevent the appendage 16 from bending in the direction such as to be released from the panel. The plate cannot therefore be removed by operating from outside the panel but can be removed only by first removing the crosspieces 20 from the inside of the panel.

The crosspieces 20 are bent at right angles at their ends so as to form two spacing and bearing elements 23. These elements are of a size such as to exert a predetermined pressure on the panel when the respective crosspiece is in position, owing to a resilient reaction of the end portions of the crosspiece to bending. The crosspiece is advantageously stiffened by a rib 24 formed on the portion which joins the two tabs 21 but not on the end portions, precisely to permit the above-mentioned bending. The pressure of the bearing elements 23 on the inner face of the panel prevents any movement of the plate 14 owing to any play due to the tolerances of the thickness of the panel 10 and of the width of the window 11.

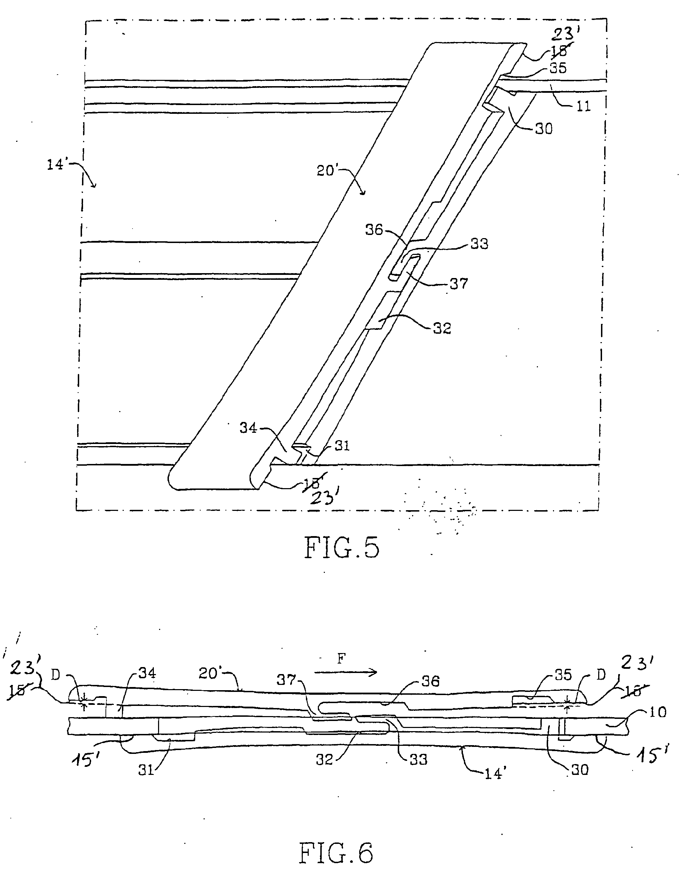

In the embodiment of Figures 5 and 6, when the closure plate, indicated 14', is fitted on a panel 10 in order at least partially to close a window 11 thereof, it appears like the plate 14 in Figure 1. It is also preferably formed from a rigid plastics strip with predetermined breakage nicks and is placed with its opposed edges 15' over opposed edge areas of the window 11. In this embodiment also, the cover has two crosspieces on the inner face of the plate, of which only one crosspiece, indicated 20', is shown in the drawings, as well as restraining means, but differs from that of Figures 1 to 4 in various constructional aspects.

The plate 14' has a projection in the form of a rib 30 of square cross-section along one of the edge areas placed over the edge of the window 11 and a recess, in the form of a square-sectioned groove 31 along the other edge area. In the intermediate region between the rib 30 and the groove 31, the plate 14' has a cavity 32 which extends along the entire plate in this embodiment and is partially undercut so as to form a channel partially covered by a projecting edge portion 33.

The crosspiece 20' is shaped substantially like the plate 14' but is mounted in a reversed arrangement, that is, it has a square-sectioned rib 34 complementary with the groove 31 of the plate, a groove 35 complementary with the rib 30 of the plate, and a cavity 36 partially undercut to form a channel with a projecting edge portion 37.

In order to close the opening 11', as can be seen in Figure 6, the plate 14' is placed on the panel 10 in a manner such that the rib 30 is in contact, or almost in contact, with an inner edge of the opening and, at the same time, the crosspiece 20' is arranged in a manner such that the projecting edge portion 37 is above the channel 32 of the plate. In this situation, the edge of the crosspiece 20' in the vicinity of the groove 35 is disposed slightly beyond the edge of the opening, and the rib 34 of the crosspiece 20' is in contact with the inner face of the panel 10 a certain distance from the.other edge of the opening. If the plate 20' is held in position against the panel 10 and a pressure is exerted on the crosspiece 20' so as to cause it to bend, the edge portion 37 of the crosspiece enters the channel 32 of the plate. If, at the same time, the crosspiece 20' is slid on the inner face of the panel in the direction indicated by the arrow F in Figure 6, the edge portion 37 of the crosspiece 20' is engaged beneath the edge portion 33 of the plate 20', the rib 34 of the crosspiece enters the groove 31 of the plate, after passing over the edge of the opening, and the rib 30 of the plate enters the groove 35 of the crosspiece. It will be noted that the edge surfaces 23' of the crosspiece which are intended to come into contact with the panel on the edge areas of the opening are recessed (distance D in Figure 6) relative to the central inner surface of the crosspiece to permit effective restraint of the ribs in the corresponding grooves.

It can also be seen that, in this embodiment also, it is impossible to remove the plate 14' from the opening 11 from outside the panel because it is held in position by the central engagement between the two edge portions 33 and 37 and by the lateral restraints between the edges of the opening, the ribs and the corresponding grooves. The plate can be removed only by lifting the end of the crosspiece 20' which has the rib 34 and sliding the crosspiece in the opposite direction to that indicated by the arrow F until the two edge portions are released.

As is clear from the embodiments described and illustrated, the cover according to the invention ensures firm closure even when the manufacturing tolerances of the windows or of the covers are quite large. Moreover, since the cover cannot be removed from the exterior, it contributes significantly to the safety of the installation.

In both of the embodiments described and illustrated two crosspieces are used. Clearly, however, if the plate has a smaller transverse dimension, a single crosspiece may suffice and, if the transverse dimension is large, it may be appropriate to use more than two crosspieces.

## Claims

1. A cover for closing an opening (11) in a panel (10) of an electrical distribution board, comprising a plate (14; 14') and means for fixing the plate to the panel, in which the plate has, on an inner face, two opposed edge areas (15; 15') which can be placed over the panel (10) in the region of two sides of the opening (11) and the fixing means are on the inner face of the plate (14; 14'), the fixing means comprising first restraining means (16; 30-33), integral with the plate (14; 14'), and at least one crosspiece (20; 20') having second restraining means (21; 34-37) for engaging the first restraining means, the crosspiece (20, 20') having, at its ends, resilient elements (23, 23'), **characterized in that** the resilient elements, when the crosspiece is in position, are bent and exert a pressure on the inner face of the panel (10).

2. A cover according to Claim 1 in which the first restraining means comprise two resiliently flexible appendages (16) of the plate (14) each having a tooth (18) for snap-engagement on corresponding opposed edges of the opening (11) and the second restraining means comprise means (21) for coupling the crosspiece (20) with the two appendages (16) to hold the crosspiece (20) in position between the appendages (16), preventing it from bending in the release direction.

3. A cover according to Claim 2 in which the coupling means comprise two resilient tabs (21) projecting from the crosspiece (20) and having elements (22) for snap-engagement on corresponding snap-engagement elements (19) of the appendages.

4. A cover according to Claim 3 in which the snap-engagement elements comprise complementary saw-toothed structures (19, 22) formed on the appendages of the plate (16) and on the resilient tabs (21) of the crosspiece (20).

5. A cover according to Claim 1 in which the first restraining means (30-33) comprise a first projection (30) adjacent to one of the two edge areas of the plate (14'), a first recess (31) adjacent to the other of the two edge areas of the plate, and a first, partially undercut cavity (32) in an intermediate region between the first projection (30) and the first recess (31), and in which the crosspiece (20') is resiliently flexible and the second restraining means (34-37) comprise a second recess (35) complementary with the first projection (30), a second projection (36) complementary with the first recess (31), and a second, partially undercut cavity (34) complementary with the first cavity (32).

6. A cover according to Claim 5 in which the two sides of the opening (11) are parallel to one another, the first projection (30) and the second projection (34) are formed as square-sectioned ribs, the first recess (31) and the second recess (35) are formed as square-sectioned grooves, and the first cavity (32) and the second cavity (36) are formed as channels partially covered by respective projecting side portions (33, 37), and in which the ribs, grooves and channels are parallel to the two sides of the opening when the plate and the crosspiece are in position.

## Patentansprüche

1. Abdeckung zum Schließen einer Öffnung (11) in einer Schalttafel (10) eines Elektroverteilers, die eine Platte (14; 14') und Mittel zum Anbringen der Platte an der Schalttafel aufweist, bei der die Platte an einer inneren Fläche zwei entgegengesetzte Kantenbereiche (15; 15') aufweist, die über der Schalttafel (10) in der Zone von zwei Seiten der Öffnung (11) platziert werden können und bei der die Anbringmittel an der inneren Fläche der Platte (14; 14') sind, wobei die Anbringmittel erste Rückhaltemittel (16; 30 - 33), die mit der Platte (14; 14') integriert sind, und zumindest ein Querstück (20; 20') aufweisen, das zweite Rückhaltemittel (21, 34 - 37) zum Eingriff mit den ersten Rückhaltemitteln aufweist, wobei das Querstück (20, 20') an seinen Enden elastische Elemente (23, 23') aufweist, **dadurch gekennzeichnet, dass** die elastischen Elemente, wenn das Querstück positioniert ist, gebogen werden und einen Druck auf die innere Fläche der Schalttafel (10) ausüben.

2. Abdeckung nach Anspruch 1, bei der die ersten Rückhaltemittel zwei elastisch biegbare Ansätze (16) der Platte (14) aufweisen, von welchen jeder einen Zahn (18) zum Einrasteingriff an entsprechenden entgegengesetzten Kanten der Öffnung (11) aufweist, und bei der die zweiten Rückhaltemittel (21) Mittel zum Koppeln des Querstücks (20) mit den zwei Ansätzen (16) aufweisen, sodass das Querstück (20) positioniert zwischen den Ansätzen (16) gehalten wird, wobei verhindert wird, dass es sich in die Entriegelungsrichtung biegt.

3. Abdeckung nach Anspruch 2, bei der die Kopplungsmittel zwei elastische Laschen (21) aufweisen, die von dem Querstück (20) vorstehen und Elemente (22) zum Einrasteingriff an entsprechenden Einrasteingriffselementen (19) der Ansätze aufweisen.

4. Abdeckung nach Anspruch 3, bei der die Einrasteingriffselemente komplementäre Sägezahnanordnungen (19, 22) aufweisen, die an den Ansätzen der Platte (16) und an den elastischen Laschen (21) des Querstücks (20) ausgebildet sind.

5. Abdeckung nach Anspruch 1, bei der die ersten Rückhaltemittel (30 - 33) einen ersten Vorsprung (30), der an einen der zwei Kantenbereiche der Platte (14') angrenzt, eine erste Aussparung (31), die an den anderen der zwei Kantenbereiche der Platte angrenzt, und eine erste, teilweise hinterschnittene Aushöhlung (32) in einer Zwischenzone zwischen dem ersten Vorsprung (30) und der ersten Aussparung (31) aufweist und bei der das Querstück (20') elastisch biegbar ist und bei der die zweiten Rückhaltemittel (34 - 37) eine zweite Aussparung (35), die komplementär zu dem ersten Vorsprung (30) ist, einen zweiten Vorsprung (36), der komplementär zu der ersten Aussparung (31) ist, und eine zweite, teilweise hinterschnittene Aushöhlung (34) aufweist, die komplementär zu der ersten Aushöhlung (32) ist.

6. Abdeckung nach Anspruch 5, bei der die zwei Seiten der Öffnung (11) parallel zueinander sind, der erste Vorsprung (30) und der zweite Vorsprung (34) als Rippen mit quadratischem Querschnitt ausgebildet sind, die erste Aussparung (31) und die zweite Aussparung (35) als Nuten mit quadratischem Querschnitt ausgebildet sind und die erste Aushöhlung (32) und die zweite Aushöhlung (36) als Kanäle ausgebildet sind, die teilweise durch jeweilige vorstehende Seitenabschnitte (33, 37) abgedeckt sind, und bei der die Rippen, Nuten und Kanäle parallel zu den zwei Seiten der Öffnung sind, wenn die Platte und das Querstück positioniert sind.

## Revendications

1. Couvercle destiné à fermer une ouverture (11) dans un panneau (10) d'un tableau de distribution électrique, comprenant une plaque (14 ; 14') et des moyens destinés à fixer la plaque au panneau, dans lequel la plaque comprend, sur une face interne, deux zones de bords opposés (15 ; 15') qui peuvent être placées sur le panneau (10) dans la région des deux côtés de l'ouverture (11) et les moyen de fixation se trouvent sur la face intérieure de la plaque (14 ; 14'), les moyens de fixation comprenant un premier moyen de retenue (16 ; 30-33), faisant partie intégrante de la plaque (14 ; 14'), et au moins une traverse (20 ; 20') ayant un deuxième moyen de retenue (21 ; 34-37) pour s'engager avec le premier moyen de retenue, la traverse (20 ; 20') ayant, au niveau de ses extrémités, des éléments élastiques (23, 23'), **caractérisé en ce que** les éléments élastiques, lorsque la traverse est en position, sont pliés et exercent une pression sur la face interne du panneau (10).

2. Couvercle selon la revendication 1 dans lequel le premier moyen de retenue comprend deux appendices élastiquement flexibles (16) de la plaque (14) ayant chacun une dent (18) pour l'engager par encliquetage sur les bords opposés correspondants de l'ouverture (11) et le deuxième moyen de retenue comprend des moyens (21) pour l'accouplement de la traverse (20) avec les deux appendices (16) afin de maintenir la traverse (20) en position entre les appendices (16), l'empêchant de fléchir dans la direction de dégagement.

3. Couvercle selon la revendication 2, dans lequel les moyens d'accouplement comprennent deux pattes élastiques (21) faisant saillie à partir de la traverse (20) et comportant des éléments (22) pour l'engagement par encliquetage sur les éléments d'engagement par encliquetage correspondants (19) des appendices.

4. Couvercle selon la revendication 3 dans lequel les éléments d'engagement par encliquetage comprennent des structures complémentaires en dents de scie (19, 22) formées sur les appendices de la plaque (16) et sur les pattes élastiques (21) de la traverse (20).

5. Couvercle selon la revendication 1 dans lequel le premier moyen de retenue (30-33) comprend une première projection (30) adjacente à l'une des deux zones de bords de la plaque (14'), un premier évidement (31) adjacent à l'autre des deux zones de bords de la plaque, et une première cavité partiellement sous-jacente (32) dans une région intermédiaire entre la première projection (30) et le premier évidement (31), et où la traverse (20') est élastiquement flexible et le deuxième moyen de retenue (34-37) comprend un deuxième évidement (35) complémentaire avec la première projection (30), une deuxième projection (36) complémentaire avec le premier évidement (31), et une second cavité partiellement sous-jacente (34) complémentaire avec la première cavité (32).

6. Couvercle selon la revendication 5 dans lequel les deux côtés de l'ouverture (11) sont parallèles, la première projection (30) et la deuxième projection (34) sont formées en tant que nervures à section carrée, le premier évidement (31) et le deuxième évidement (35) sont formés en tant que rainures à section carrée, et la première cavité (32) et la seconde cavité (35) sont formés en tant que canaux partiellement couverts par les parties latérales en saillie respectives (33, 37), et dans lequel les nervures, rainures et canaux sont parallèles aux deux côtés de l'ouverture lorsque la plaque et la traverse sont en position.
